# EUROPÄISCHE PATENTSCHRIFT

(11) **EP 1 770 241 B1**
(45) Veröffentlichungstag und Bekanntmachung des Hinweises auf die Patenterteilung: **10.04.2013**
(21) Anmeldenummer: 06018393.6
(22) Anmeldetag: 02.09.2006
(51) Int. Cl.: E06B 9/90, B60J 1/20

(54) **Rolloeinrichtung**
Roller blind device
Dispositif de rouleau

(30) Priorität: 29.09.2005 DE 102005046513
(43) Veröffentlichungstag der Anmeldung: 04.04.2007
(73) Patentinhaber: HAPPICH GmbH, 42119 Wuppertal (DE)
(72) Erfinder: Van Ooy, Andreas, 42555 Velbert (DE); Churchfield, Vincent, 42477 Radevormwald (DE)

(56) Entgegenhaltungen:
- DE-C- 21 457
- DE-U1- 29 923 460

## Beschreibung

Die Erfindung bezieht sich auf eine Rolloeinrichtung mit einer eine Aufwickeleinrichtung aufweisenden, in einem Kassettengehäuse angeordneten Wickelwelle, einer auf die Wickelwelle aufwickelbaren Rollobahn und einem Zugstab, an dem das freie Ende der Rollobahn befestigt ist, wobei die Enden der Wickelwelle über jeweils eine Lagereinrichtung in den Endkappenstücken des Kassettengehäuses gelagert sind, wobei die jeweilige Lagereinrichtung mit Arretiermitteln zum Zusammenwirken mit einer federbelasteten, eine deren Lösezustand bewirkende Schalteinrichtung aufweisende Arretiereinrichtung für die Wickelwelle versehen ist.

Es sind aus dem Stand der Technik verschiedene Rolloeinrichtungen bekannt, bei denen die Enden der Wickelwelle über jeweils eine Lagereinrichtung in den Endkappenstücken des Kassettengehäuse gelagert sind. Es sei dazu beispielhaft auf das DE-GM 299 23 460 verwiesen. Es bezieht sich diese Druckschrift auf ein Sonnenschutzrollo für Fenster, insbesondere Fahrzeugfenster, mit einer durch Endstücke begrenzten Kassette, einer zwischen den Endstücken drehbeweglich aufgenommenen rohrförmigen Wickelwelle zum Auf- und Abwickeln einer daran mit einem Randstreifen befestigten Rollobahn aus lichtabschirmendem Material, zwei in die freien Enden der Wickelwelle eingreifenden Lagerkörpern, einer sich innerhalb der Wickelwelle über einen axialen Teilbereich derselben erstreckenden Achse, die mit einem Endbereich einen der Lagerkörper durchsetzt und mit ihrem anderen Endbereich in einen innerhalb der Wickelwelle aufgenommenen Stützkörper gelagert ist und eine auf der Achse angeordneten und daran einendig festgelegten Antriebsfeder. Es ist dabei u. a. vorgesehen, dass die Lagerkörper jeweils an einem Ende einen Zapfen und am anderen Ende einen Ringflansch sowie ein sich daran anschließendes, oben besagtes Arretiermittel bildendes Ritzel aufweisen, wobei der Zapfen zur einendigen Aufnahme der Antriebsfeder, der Ringflansch als die Einstecktiefe des Lagerkörpers begrenzender Anschlag und das Ritzel zum Zusammenwirken mit einem federbelasteten, die oben besagte Arretiereinrichtung für die Wickelwelle bildenden Rasthebel geeignet ist. Der Rasthebel weist dabei eine dessen Lösezustand bewirkende Schalteinrichtung auf, die in dem in den Figuren der Zeichnung dargestellten Ausführungsbeispiel u. a. einen Kordelzug umfasst. Ein derart ausgebildetes Sonnenschutzrollo ist an sich in zufriedenstellender Weise in verschiedenen Öffnungs- bzw. Schließstellungen über die Ritzel-Rasthebelanordnung arretierbar bzw. eine Zwangsbremsung des Sonnenschutzrollos erzielbar, nachteilig ist dabei allerdings der hohe konstruktive Aufwand und die damit verbundenen hohen Herstellungskosten eines derartigen Sonnenschutzrollos.

Ausgehend von den bekannten Rolloeinrichtungen liegt der Erfindung die Aufgabe zu Grunde, die bekannten Anordnungen unter Beibehaltung der bisherigen Vorteile insbesondere bezüglich der Möglichkeiten für eine stufenlose Arretierbarkeit bzw. der Verwirklichung einer Zwangsbremsung in der Weise zu verbessern bzw. weiter zu entwickeln, dass die beschriebenen Nachteile der bekannten Ausführungsformen vermieden werden, d. h. es soll insbesondere eine deutliche Vereinfachung des konstruktiven Aufbaus und damit eine deutliche Reduzierung der Herstellungskosten erzielt werden. Die gewünschte Anordnung soll dabei insbesondere auch einfach in der Handhabung und zuverlässig in den Funktionseigenschaften sein.

Die Aufgabe wird erfindungsgemäß dadurch gelöst, dass die Arretiermittel der jeweiligen Lagereinrichtung durch jeweils wenigstens eine auf der Wickelwelle befindliche Schleifscheibe und die federbelastete Arretiereinrichtung durch wenigstens einen mit dieser Schleifscheibe in Wirkverbindung stehenden Exzenterschleifhebel gebildet sind. Auf diese Weise wird erstmalig mit einfachen Mitteln eine Rolloeinrichtung geschaffen, die einen konstruktiv einfachen Aufbau aufweist und trotzdem eine stufenlose ruckfreie Arretierbarkeit der Rolloeinrichtung in den verschiedenen Öffnungs- bzw. Schließstellungen ermöglicht bzw. eine funktionsgerechte Zwangsbremsung dieser Rolloeinrichtung ermöglicht. Es wird dabei mit dem mit der Schleifscheibe in Wirkverbindung stehenden federbelasteten Exzenterschleifhebel die Wirkung einer Exzenterbremse erzielt, die durch Betätigung der mit diesem Exzenterschleifhebel verbundenen Schalteinrichtung einfach in deren Lösezustand versetzt werden kann. Nach Loslassen der Schalteinrichtung wird die Rolloeinrichtung dann in der entsprechenden aktuellen Position arretiert. Auf diese Weise ist die erfindungsgemäße Rolloeinrichtung nicht nur einfach aufgebaut und daher kostengünstig herstellbar, sondern auch einfach in der Handhabung und zuverlässig und sicher in ihren Funktionseigenschaften. Es ergibt sich dabei auch durch die Wirkung der Exzenterbremse eine Reduzierung der mechanischen Belastung des Betätigungselements sowie der Vorteil einer im Wesentlichen wartungsfreien Anordnung, da diese selbst nachstellend ausgebildet ist.

Bei der bevorzugten Ausführungsform der vorliegenden Erfindung ist vorgesehen, dass die jeweilige Schleifscheibe fest auf der Wickelwelle montiert ausgebildet ist. Es ist dabei bei einer Ausführungsform vorgesehen, dass die jeweilige Schleifscheibe durch Verklebung fest auf der Wickelwelle montiert ist, bei davon abweichenden Ausführungsformen ist vorgesehen, dass die jeweilige Schleifscheibe durch Verstiftung fest auf der Wickelwelle montiert ist bzw. dass die jeweilige Schleifscheibe durch formschlüssige Verbindung mit der Wickelwelle fest auf dieser montiert ist.

Nach einem weiteren Merkmal der vorliegenden Erfindung ist vorgesehen, dass der wenigstens eine Exzenterschleifhebel an einem Endkappenstück des Kassettengehäuses gelagert ist. Dabei empfiehlt es sich, dass der wenigstens eine Exzenterschleifhebel auf einem Zapfen an einem Endkappenstück des Kassettengehäuses gelagert ist, dies ist eine konstruktiv einfache Ausgestaltungsform.

Es empfiehlt sich nach einem weiteren Ausgestaltungsmerkmal der vorliegenden Erfindung, dass der wenigstens eine Exzenterschleifhebel wenigstens eine dessen für ein Verlagerelement wie z. B. den Zapfen vorgesehene Bohrung umgebende, exzentrisch ausgebildete, mit der auf der Wickelwelle befindlichen Schleifscheibe zusammen wirkende Führungsscheibe umfasst. Auf diese Weise wird die Exzenterfunktion mit einfachen Mitteln ermöglicht. Dabei empfiehlt es sich, dass die Berührungsfläche der exzentrischen Führungsscheibe des Exzenterschleifhebels und der Schleifscheibe auf der Wickelwelle im Wesentlichen linear ausgebildet ist.

Nach einem weiteren Merkmal der vorliegenden Erfindung ist vorgesehen, dass der Exzenterschleifhebel durch eine Drehschenkelfeder federbelastet gelagert ist.

Nach einem weiteren bevorzugten Ausgestaltungsmerkmal der vorliegenden Erfindung ist vorgesehen, dass die den Lösezustand des Exzenterschleifhebels bewirkende Schalteinrichtung als an dem Zugstab befindliche Tast-Schalteinrichtung ausgebildet ist. Bei dieser Ausführungsform kann auf einfache Weise durch Betätigung der Tast-Schalteinrichtung an dem Zugstab der Exzenterschleifhebel in seinen Lösezustand überführt werden und anschließend der Zugstab je nach Belieben verstellt werden. Nach Loslassen der Tast-Schalteinrichtung wird dann die Rolloeinrichtung entsprechend durch den Exzenterschleifhebel positioniert. Es empfiehlt sich dabei bei dieser Ausführungsform, dass die an dem Zugstab befindliche Tast-Schalteinrichtung als Relaisbetätigung ausgebildet ist.

Bei einer davon abweichenden Ausführungsform der vorliegenden Erfindung ist vorgesehen, dass die den Lösezustand des Exzenterschleifhebels bewirkende Schalteinrichtung als Bowdenzugbetätigung ausgebildet ist. Es erfolgt bei dieser Ausführungsform die Betätigung der Schalteinrichtung in analoger Weise wie bei der zuvor beschriebenen Ausführungsform, so dass die Bowdenzugbetätigung an einer beliebigen Stelle in der Nähe der Rolloeinrichtung angebracht werden kann. In diesem Fall ist ein Herunterziehen der Rolloeinrichtung ohne Betätigung der Bowdenzugbetätigung möglich, zum Hochziehen der Rolloeinrichtung hingegen muss die Bowdenzugbetätigung betätigt werden. Es kann dabei bei einer ersten Variante dieser Ausführungsform die Betätigung der Bowdenzugbetätigung mechanisch ausgebildet sein, bei einer zweiten Variante und dem damit letzten Ausgestaltungsmerkmal der vorliegenden Erfindung ist vorgesehen, dass die Betätigung der Bowdenzugbetätigung elektromechanisch ausgebildet ist. Diese Ausführungsform ist insbesondere dann zu wählen, wenn der Bauraum die Unterbringung einer elektromechanischen Betätigung wie z. B. durch Relais oder dgl. in einfacher Weise zulässt.

Die Erfindung ist in den Figuren der Zeichnung in mehreren Ausführungsbeispielen dargestellt. Es zeigen:
- Fig. 1: eine schematische, perspektivische Teilansicht der erfindungsgemäßen Rolloeinrichtung mit angedeutetem Exzenterschleifhebel,
- Fig. 2: eine schematische Schnittansicht durch das Kassettengehäuse der erfindungsgemäßen Rolloeinrichtung,
- Fig. 3: eine schematische, perspektivische Teilansicht der erfindungsgemäßen Rolloeinrichtung bei teilweise entferntem Kassettengehäuse,
- Fig. 4: die Ansicht gemäß der Fig. 3 der Zeichnung von der Oberseite her gesehen,
- Fig. 5: eine schematische, perspektivische Teilansicht einer abgewandelten Ausführungsform der erfindungsgemäßen Rolloeinrichtung mit in dem Zugstab befindlicher Tast-Schalteinheit,
- Fig. 6: eine schematische, perspektivische Teilansicht der Ausführungsform gemäß der Fig. 5 im Bereich des Exzenterschleifhebels,
- Fig. 7: eine schematische, perspektivische Teilansicht einer weiteren abgewandelten Ausführungsform der erfindungsgemäßen Rolloeinrichtung mit Bowdenzugbetätigung.

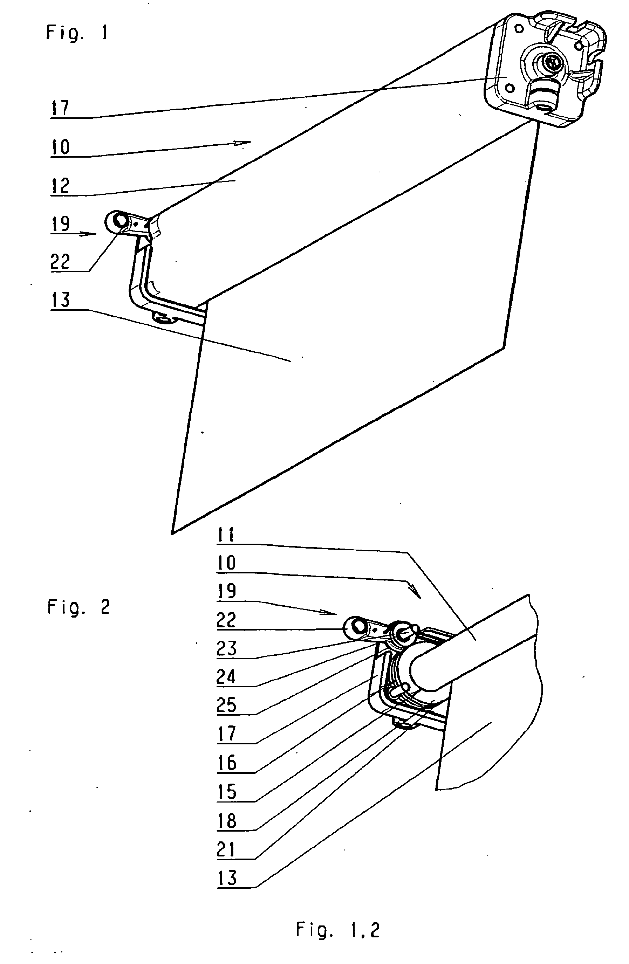

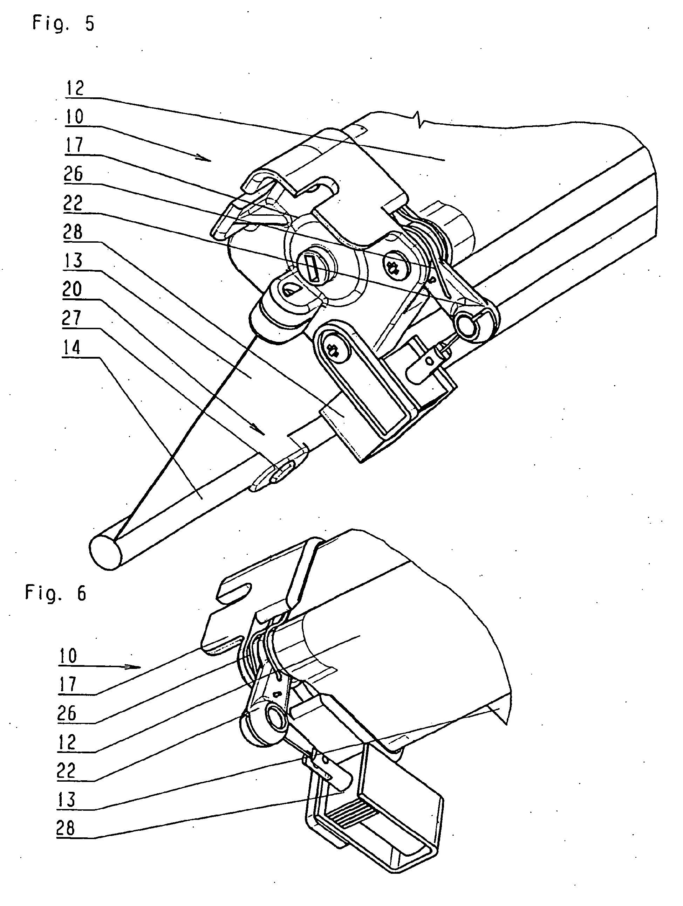

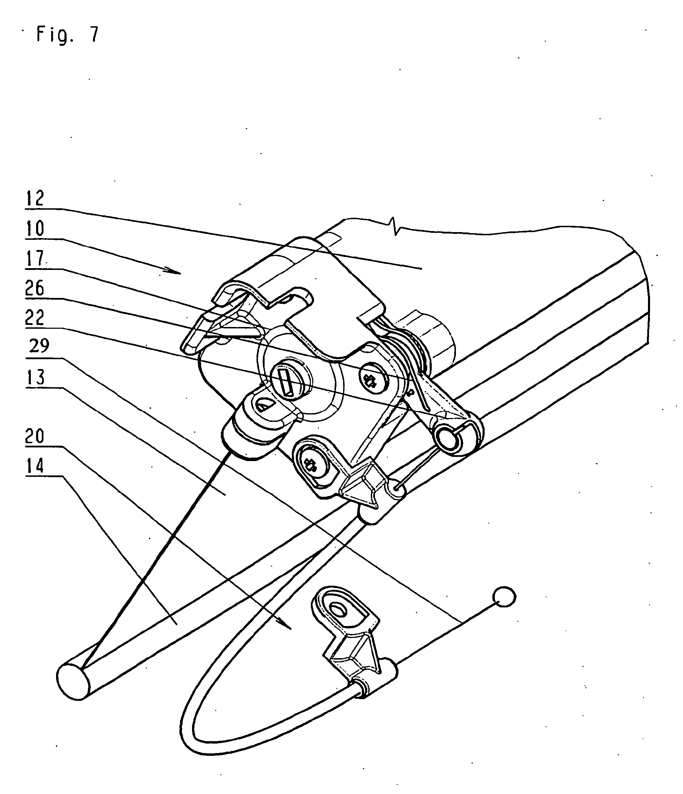

Die erfindungsgemäße Rolloeinrichtung ist generell mit 10 bezeichnet und ist insbesondere für eine Verwendung bei Großraumfahrzeugen vorgesehen. Die Rolloeinrichtung 10 umfasst eine eine in den Figuren der Zeichnung nicht separat dargestellte Aufwickeleinrichtung aufweisende, in einem Kassettengehäuse 12 angeordnete mit 11 bezeichnete Wickelwelle, eine auf die Wickelwellwelle 11 aufwickelbare Rollobahn 13 und einen Zugstab 14, an dem das freie Ende der Rollobahn 13 befestigt ist. Es wird dazu zunächst auf die Fig. 1 der Zeichnung sowie bezüglich der Ausbildung des Zugstabs 14 auf die Figuren 5 und 7 der Zeichnung verwiesen. Es sind dabei die Enden 15 der Wickelwelle 11 über jeweils eine Lagereinrichtung 16 in den Endkappenstücken 17 des Kassettengehäuses 12 gelagert, siehe dazu beispielsweise die Fig. 2 der Zeichnung. Die jeweilige Lagereinrichtung 16 ist dabei mit noch näher zu erläuternden Arretiermitteln 18 zum Zusammenwirken mit einer federbelasteten, ebenfalls noch näher zu erläuternden Arretiereinrichtung 19 für die Wickelwelle 11 versehen, es weist dabei die Arretiereinrichtung 19 eine deren Lösezustand bewirkende, mit 20 bezeichnete Schalteinrichtung auf, siehe dazu beispielsweise zunächst die Figuren 5 und 7 der Zeichnung.

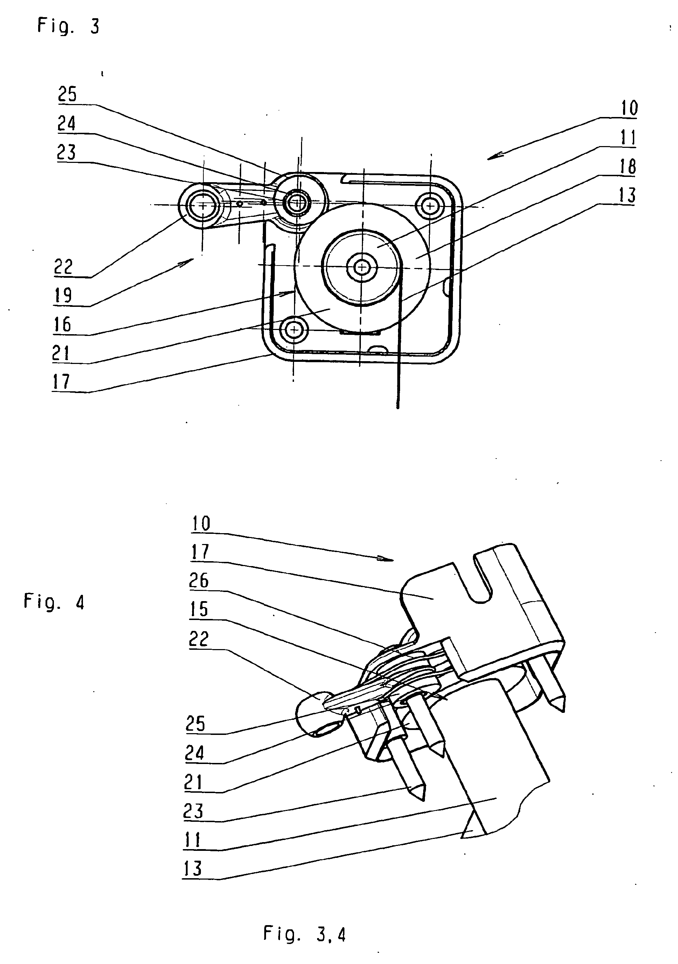

Bei der erfindungsgemäßen Rolloeinrichtung 10 ist nun vorgesehen, siehe dazu beispielsweise die Fig. 2 in Verbindung mit der Fig. 3 der Zeichnung, dass die Arretiermittel 18 der jeweiligen Lagereinrichtung 16 durch jeweils wenigstens eine auf der Wickelwelle 11 befindliche Schleifscheibe 21 und die federbelastete Arretiereinrichtung 19 durch wenigstens einen mit dieser Schleifscheibe 21 in Wirkverbindung stehenden Exzenterschleifhebel 22 gebildet sind. Es ist dazu in den Figuren der Zeichnung, wie beispielsweise Fig. 2 oder Fig. 3, an dem dargestellten Ende 15 der Wickelwelle 11 jeweils eine Schleifscheibe 21 und ein Exzenterschleifhebel 22 dargestellt. Mit einer derart ausgebildeten Rolloeinrichtung 10 wird insbesondere der bei den bisher aus dem Stand der Technik bekannten Ausführungsformen aufwendige konstruktive Aufbau vermieden, wobei trotzdem eine stufenlose ruckfreie Arretierbarkeit dieser Rolloeinrichtung 10 bzw. eine funktionsgerechte Zwangsbremsung für diese Rolloeinrichtung 10 bereit gestellt wird. Es wirkt dabei der mit der Schleifscheibe 21 in Wirkverbindung stehende Exzenterschleifhebel 22 als Exzenterbremse, d. h. bei Betätigung der Schalteinrichtung 20 wird der Exzenterschleifhebel 22 in seinen Lösezustand überführt, so dass die erfindungsgemäße Rolloeinrichtung 10 nach oben bzw. unten verstellt werden kann, nach Loslassen der Schalteinrichtung 20 wird der Exzenterschleifhebel 22 automatisch durch seine Federbelastung in seinen abbremsenden und damit arretierenden Zustand überführt. Die erfindungsgemäße Rolloeinrichtung 10 ist damit nicht nur konstruktiv einfach aufgebaut und damit kostengünstig herstellbar sondern auch einfach in der Handhabung und sicher und zuverlässig in den Funktionseigenschaften. Es ergibt sich dabei auch durch die Wirkung der Exzenterbremse eine Reduzierung der mechanischen Belastung des Betätigungselements sowie der Vorteil einer im Wesentlichen wartungsfreien Anordnung, da diese selbst nachstellend ausgebildet ist.

Bei der erfindungsgemäßen Rolloeinrichtung 10 ist weiterhin vorgesehen, dass die jeweilige Schleifscheibe 21 fest auf der Wickelwelle 11 montiert ausgebildet ist, wobei diesbezüglich mehrere Varianten möglich sind. Bei einer ersten Variante ist die jeweilige Schleifscheibe 21 durch Verklebung fest auf der Wickelwelle 11 montiert, bei einer zweiten Möglichkeit ist die jeweilige Schleifscheibe 21 durch Verstiftung fest auf der Wickelwelle 11 montiert und bei einer dritten Möglichkeit ist die jeweilige Schleifscheibe 21 durch formschlüssige Verbindung mit der Wickelwelle 11 fest auf dieser montiert.

Bei den in den Figuren der Zeichnung dargestellten Ausführungsbeispielen der erfindungsgemäßen Rolloeinrichtung 10 ist weiterhin vorgesehen, siehe dazu beispielsweise die Figuren 2 oder 4 in Verbindung mit der Fig. 3 der Zeichnung, dass der wenigstens eine Exzenterschleifhebel 22 an einem Endkappenstück 17 des Kassettengehäuses 12 gelagert ist, es ist dabei in diesem Fall der dargestellte Exzenterschleifhebel 22 auf einem Zapfen 23 an dem dargestellten Endkappenstück 17 des Kassettengehäuses 12 gelagert.

Der in den Figuren der Zeichnung dargestellte Exzenterschleifhebel 22 umfasst, siehe dazu wieder die Fig. 3 in Verbindung mit der Fig. 2 der Zeichnung, eine dessen für ein Lagerelement wie vorliegend den Zapfen 23 vorgesehene Bohrung 24 umgebende, exzentrisch ausgebildete, mit der auf der Wickelwelle 11 befindlichen Schleifscheibe 21 zusammen wirkende Führungsscheibe 25. Es ist dabei die Berührungsfläche dieser exzentrischen Führungsscheibe 25 des Exzenterschleifhebels 22 und der Schleifscheibe 21 auf der Wickelwelle 11 im Wesentlichen linear ausgebildet. Es wird durch diese exzentrisch ausgebildete Führungsscheibe 25 an dem Exzenterschleifhebel 22 die Exzenterfunktion in funktionsgerechter Weise bereitgestellt, es ergibt sich dabei die folgende Funktionsweise:

Durch Betätigung des Exzenterschleifhebels 22 nach unten über die dessen Lösezustand bewirkende Schalteinrichtung 20 bzw. durch Drehen des Exzenterschleifhebels 22 im Gegenuhrzeigersinn bewegt sich die lineare Berührungsfläche aus dem Wirkungsbereich der exzentrischen Führungsscheibe 25 und der Schleifscheibe 21 heraus, d. h. die Reibung in diesem Bereich wird geringer bzw. gegen Null gehen. In diesem Fall kann sich dann die vorgespannte Wickelwelle 11, siehe dazu beispielsweise die Fig. 3 der Zeichnung, im Gegenuhrzeigersinn aufwickeln. Im anderen Fall, d. h. beim Ziehen an der Rollobahn 13 bzw. Drehen der Wickelwelle 11 im Uhrzeigersinn wird der Exzenterschleifhebel 22 im Gegenuhrzeigersinn bewegt, d. h. auch in diesem Fall wird sich die Berührungsfläche aus dem Wirkungsbereich der exzentrischen Führungsscheibe 25 und der Schleifscheibe 21 heraus bewegen, so dass sich die Reibung zwischen diesen beiden Teilen verringert und so die Rollobahn 13 ohne großen Widerstand und somit mit geringem Kraftaufwand abgerollt werden kann.

Der in den Figuren der Zeichnung dargestellte Exzenterschleifhebel 22 ist, siehe dazu beispielsweise die Fig. 4 oder auch die Figuren 5 und 6 der Zeichnung, durch eine Drehschenkelfeder 26 federbelastet gelagert, d. h. der besagte Exzenterschleifhebel 22 bzw. dessen exzentrische Führungsscheibe 25 wird mittels der Drehschenkelfeder 26 auf die Schleifscheibe 21 gedrückt.

In den Figuren 5 bis 7 der Zeichnung sind noch zwei abweichende Ausführungsformen der erfindungsgemäßen Rolloeinrichtung dargestellt. Bei dem in den Figuren 5 und 6 der Zeichnung dargestellten Ausführungsbeispiel ist die den Lösezustand des Exzenterschleifhebels 22 bewirkende Schalteinrichtung 20 als an dem Zugstab 14 befindliche Tast-Schalteinrichtung 27 ausgebildet, siehe dazu insbesondere die Fig. 5 der Zeichnung. Es ist dabei bei dem dargestellten Ausführungsbeispiel die an dem Zugstab 14 befindliche Tast-Schalteinrichtung 27 als Relaisbetätigung ausgebildet, das dazugehörige Relais ist in den Figuren 5 und 6 der Zeichnung ebenfalls dargestellt und mit 28 bezeichnet. Es erfolgt bei diesem Ausführungsbeispiel in einfacher Weise ein Lösen des Exzenterschleifhebels 22 und damit der Exzenterbremse durch Betätigen der Tast-Schalteinrichtung 27 an dem Zugstab 14 mittels Relaisbetätigung. Es wird dabei die Tast-Schalteinrichtung 27 bei gleichzeitigem Halten des Zugstabs 14 betätigt. Der Zugstab 14 kann dann nach Belieben in auf- oder abwärtiger Richtung verstellt werden, nach dem Loslassen der Tast-Schalteinrichtung 27 wird dann der Zugstab 14 und damit die Rolloeinrichtung 10 durch den federbelasteten Exzenterschleifhebel 22 in der entsprechenden Stellung arretiert und dort positioniert.

Bei dem in der Fig. 7 der Zeichnung dargestellten Ausführungsbeispiel der erfindungsgemäßen Rolloeinrichtung ist die den Lösezustand des Exzenterschleifhebels 22 bewirkende Schalteinrichtung 20 als Bowdenzugbetätigung 29 ausgebildet. Es kann dabei bei einer Ausführungsform die Betätigung dieser Bowdenzugbetätigung 29 mechanisch ausgebildet sein. Bei einer alternativen Ausführungsform kann diese Betätigung der Bowdenzugbetätigung 29 elektromechanisch ausgebildet sein. Im erstgenannten Fall wird die mechanische Betätigung bevorzugt über eine Zugbetätigung erfolgen, im zweitgenannten Fall wird die elektromechanische Betätigung bevorzugt über ein Relais erfolgen, insbesondere in dem Fall, wenn der Bauraum ein problemloses Unterbringen eines solchen Relais bei der erfindungsgemäßen Rolloeinrichtung 10 zulässt. Bezüglich dieser Ausführungsform ist in der Fig. 7 der Zeichnung die mit dem Exzenterschleifhebel 22 in Wirkverbindung stehende Bowdenzugbetätigung 29 schematisch dargestellt. Die eigentlichen Betätigungs-, Übertragungs- und Lagerelemente dieser Bowdenzugbetätigung 29 können einen an sich bekannten Aufbau aufweisen, und werden deshalb nicht näher beschrieben bzw. in der Fig. 7 der Zeichnung nicht weiter bezeichnet. Bei dieser Ausführungsform der erfindungsgemäßen Rolloeinrichtung 10 erfolgt also ein Lösen des Exzenterschleifhebels 22 über die Bowdenzugbetätigung 29. Es kann dabei in vorteilhafter Weise diese Bowdenzugbetätigung 29 an beliebiger Stelle in der Nähe der Rolloeinrichtung 10 positioniert werden. Bei dieser Ausführungsform ist ein Herunterziehen des Zugstabs 14 der Rolloeinrichtung 10 ohne eine Betätigung der Bowdenzugbetätigung 29 möglich, da sich die Exzenterbremse selbständig löst. Ein Aufrollen der Rolloeinrichtung 10 erfordert dem gegenüber die Betätigung der Bowdenzugbetätigung 29 durch die erwähnten mechanischen oder elektromechanischen Mittel.

Mit der erfindungsgemäßen Rolloeinrichtung 10 lässt sich der Zugstab 14 dieser Rolloeinrichtung 10 über die Wirkung des mit der Schleifscheibe 21 in Wirkverbindung stehenden Exzenterschleifhebels 22 problemlos an beliebiger Stelle positionieren bzw. es wird an dieser Stelle eine Zwangsbremsung bereit gestellt. Es ist dabei die erfindungsgemäße Rolloreinrichtung 10 trotzdem einfach im Aufbau und somit kostengünstig herstellbar.

Bezüglich der weiteren in den Figuren der Zeichnung dargestellten konstruktiven Ausgestaltungsmerkmale wie beispielsweise die Anbringungselemente für die Endkappenstücke 17 des Kassettengehäuses 12 etc. können einen an sich bekannten Aufbau aufweisen, und sind deshalb in den Figuren der Zeichnung nicht separat bezeichnet bzw. in der Beschreibung nicht separat beschrieben worden.

Wie bereits erwähnt, sind die dargestellten Ausführungsformen nur beispielsweise Verwirklichungen der Erfindung. Diese ist nicht darauf beschränkt, es sind vielmehr noch mancherlei Abänderungen und Ausbildungen möglich. So sind insbesondere Abwandlungen in der konstruktiven Ausbildung im Bereich der Lagereinrichtung 16 möglich, weiterhin denkbar ist selbstverständlich eine Anwendung bei andersartig als die dargestellten Ausführungsformen aufgebauten Rolloeinrichtungen 10, es ist insbesondere eine Anwendung bei allen mechanisch gebremsten bzw. arretierbaren Rolloeinrichtungen für Wand- und Deckenmontage vorgesehen.

Im Übrigen können auch von den Figuren der Zeichnung abweichende Schalteinrichtungen 20 für den Exzenterschleifhebel 22 Verwendung finden.

### Bezugszeichenliste:

- 10: Rolloeinrichtung
- 11: Wickelwelle
- 12: Kassettengehäuse
- 13: Rollobahn
- 14: Zugstab
- 15: Ende (von 11)
- 16: Lagereinrichtung (an 17 für 15)
- 17: Endkappenstück (von 12)
- 18: Arretiermittel (an 16)
- 19: Arretiereinrichtung (für 11)
- 20: Schalteinrichtung (zum Lösen von 19)
- 21: Schleifscheibe
- 22: Exzenterschleifhebel
- 23: Zapfen (für 22 an 17)
- 24: Bohrung (an 22 für 23)
- 25: Führungsscheibe (an 22)
- 26: Drehschenkelfeder
- 27: Tast-Schalteinrichtung (an 14 für 22)
- 28: Relais (für 27)
- 29: Bowdenzugbetätigung

## Patentansprüche

1. Rolloeinrichtung (10) mit einer eine Aufwickeleinrichtung aufweisenden, in einem Kassettengehäuse (12) angeordneten Wickelwelle (11), einer auf die Wickelwelle (11) aufwickelbaren Rollobahn (13) und einem Zugstab (14), an dem das freie Ende der Rollobahn (13) befestigt ist, wobei die Enden (15) der Wickelwelle (11) über jeweils eine Lagereinrichtung (16) in den Endkappenstücken (17) des Kassettengehäuses (12) gelagert sind, wobei die jeweilige Lagereinrichtung (16) mit Arretiermitteln (18) zum Zusammenwirken mit einer federbelasteten, eine deren Lösezustand bewirkende Schalteinrichtung (20) aufweisende Arretiereinrichtung (19) für die Wickelwelle (11) versehen ist, **dadurch gekennzeichnet, dass** die Arretiermittel (18) der jeweiligen Lagereinrichtung (16) durch jeweils wenigstens eine auf der Wickelwelle (11) befindliche Schleifscheibe (21) und die federbelastete Arretiereinrichtung (19) durch wenigstens einen mit dieser Schleifscheibe (21) in Wirkverbindung stehenden Exzenterschleifhebel (22) gebildet sind.

2. Rolloeinrichtung nach Anspruch 1, **dadurch gekennzeichnet, dass** die jeweilige Schleifscheibe (21) fest auf der Wickelwelle (11) montiert ausgebildet ist.

3. Rolloeinrichtung nach Anspruch 2, **dadurch gekennzeichnet, dass** die jeweilige Schleifscheibe (21) durch Verklebung fest auf der Wickelwelle (11) montiert ist.

4. Rolloeinrichtung nach Anspruch 2, **dadurch gekennzeichnet, dass** die jeweilige Schleifscheibe (21) durch Verstiftung fest auf der Wickelwelle (11) montiert ist.

5. Rolloeinrichtung nach Anspruch 2, **dadurch gekennzeichnet, dass** die jeweilige Schleifscheibe (21) durch formschlüssige Verbindung mit der Wickelwelle (11) fest auf dieser montiert ist.

6. Rolloeinrichtung nach einem der Ansprüche 1 bis 5, **dadurch gekennzeichnet, dass** der wenigstens eine Exzenterschleifhebel (22) an einem Endkappenstück (17) des Kassettengehäuses (12) gelagert ist.

7. Rolloeinrichtung nach Anspruch 6, **dadurch gekennzeichnet, dass** der wenigstens eine Exzenterschleifhebel (22) auf einem Zapfen (23) an einem Endkappenstück (17) des Kassettengehäuses (12) gelagert ist.

8. Rolloeinrichtung nach einem der Ansprüche 1 bis 7, **dadurch gekennzeichnet, dass** der wenigstens eine Exzenterschleifhebel (22) wenigstens eine dessen für ein Lagerelement wie z. B. den Zapfen (23) vorgesehene Bohrung (24) umgebende, exzentrisch ausgebildete, mit der auf der Wickelwelle (11) befindlichen Schleifscheibe (21) zusammenwirkende Führungsscheibe (25) aufweist.

9. Rolloeinrichtung nach Anspruch 8, **dadurch gekennzeichnet, dass** die Berührungsfläche der exzentrischen Führungsscheibe (25) des Exzenterschleifhebels (22) und der Schleifscheibe (21) auf der Wickelwelle (11) im Wesentlichen linear ausgebildet ist.

10. Rolloeinrichtung nach einem der Ansprüche 1 bis 9, **dadurch gekennzeichnet, dass** der Exzenterschleifhebel (22) durch eine Drehschenkelfeder (26) federbelastet gelagert ist.

11. Rolloeinrichtung nach einem der Ansprüche 1 bis 10, **dadurch gekennzeichnet, dass** die den Lösezustand des Exzenterschleifhebels (22) bewirkende Schalteinrichtung (20) als an dem Zugstab (14) befindliche Tast-Schalteinrichtung (27) ausgebildet ist.

12. Rolloeinrichtung nach Anspruch 11, **dadurch gekennzeichnet, dass** die an dem Zugstab (14) befindliche Tast-Schalteinrichtung (27) als Relaisbetätigung ausgebildet ist.

13. Rolloeinrichtung nach einem der Ansprüche 1 bis 10, **dadurch gekennzeichnet, dass** die den Lösezustand des Exzenterschleifhebels (22) bewirkende Schalteinrichtung (20) als Bowdenzugbetätigung (29) ausgebildet ist.

14. Rolloeinrichtung nach Anspruch 13, **dadurch gekennzeichnet, dass** die Betätigung der Bowdenzugbetätigung (29) mechanisch ausgebildet ist.

15. Rolloeinrichtung nach Anspruch 13, **dadurch gekennzeichnet, dass** die Betätigung der Bowdenzugbetätigung (29) elektromechanisch ausgebildet ist.

## Claims

1. Roller blind device (10) with a winding shaft (11) which has a winding-up device and is arranged in a cassette housing (12), a roller blind web (13) which can be wound onto the winding shaft (11), and a pull bar (14) to which the free end of the roller blind web (13) is fastened, wherein the ends (15) of the winding shaft (11) are mounted in the end cap pieces (17) of the cassette housing (12) via a bearing device (16) in each case, wherein each bearing device (16) is provided with locking means (18) for interacting with a spring-loaded locking device (19) for the winding shaft (11), said locking device having a switching device (20) bringing about the release state of said locking means, **characterized in that** the locking means (18) of each bearing device (16) are formed by in each case at least one friction disc (21) located on the winding shaft (11), and the spring-loaded blocking device (19) is formed by at least one eccentric friction lever (22) which is operatively connected to the said friction disc (21).

2. Roller blind device according to Claim 1, **characterized in that** each friction disc (21) is formed mounted fixedly on the winding shaft (11).

3. Roller blind device according to Claim 2, **characterized in that** each friction disc (21) is mounted fixedly on the winding shaft (11) by adhesive bonding.

4. Roller blind device according to Claim 2, **characterized in that** each friction disc (21) is mounted fixedly on the winding shaft (11) by pinning.

5. Roller blind device according to Claim 2, **characterized in that** each friction disc (21) is mounted fixedly on the winding shaft (11) by means of a form-fitting connection thereto.

6. Roller blind device according to one of Claims 1 to 5, **characterized in that** the at least one eccentric friction lever (22) is mounted on an end cap piece (17) of the cassette housing (12).

7. Roller blind device according to Claim 6, **characterized in that** the at least one eccentric friction lever (22) is mounted on a journal (23) on an end cap piece (17) of the cassette housing (12).

8. Roller blind device according to one of Claims 1 to 7, **characterized in that** the at least one eccentric friction lever (22) has at least one guide disc (25) which surrounds a hole (24) provided therein for a bearing element, such as, for example, the journal (23), is formed eccentrically and interacts with the friction disc (21) located on the winding shaft (11).

9. Roller blind device according to Claim 8, **characterized in that** the contact surface of the eccentric guide disc (25) of the eccentric friction lever (22) and of the friction disc (21) is formed in a substantially linear manner on the winding shaft (11).

10. Roller blind device according to one of Claims 1 to 9, **characterized in that** the eccentric friction lever (22) is mounted in a spring-loaded manner by a rotary leg spring (26).

11. Roller blind device according to one of Claims 1 to 10, **characterized in that** the switching device (20) bringing about the release state of the eccentric friction lever (22) is in the form of a touch-sensitive switching device (27) located on the pull bar (14).

12. Roller blind device according to Claim 11, **characterized in that** the touch-sensitive switching device (27) located on the pull bar (15) is in the form of a relay actuation.

13. Roller blind device according to one Claims 1 to 10, **characterized in that** the switching device (20) bringing about the release state of the eccentric friction lever (22) is in the form of a Bowden cable actuation (29).

14. Roller blind device according to Claim 13, **characterized in that** the actuation of the Bowden cable actuation (29) is formed mechanically.

15. Roller blind device according to Claim 13, **characterized in that** the actuation of the Bowden cable actuation (29) is formed electromechanically.

## Revendications

1. Dispositif de rouleau (10) comprenant un arbre d'enroulement (11) présentant un dispositif d'enroulement, disposé dans un boîtier de cassette (12), une bande de rouleau (13) pouvant être enroulée sur l'arbre d'enroulement (11) et une barre de traction (14) sur laquelle est fixée d'extrémité libre de la bande de rouleau (13), les extrémités (15) de l'arbre d'enroulement (11) étant supportées à chaque fois par le biais d'un dispositif de palier (16) dans les embouts d'extrémité (17) du boîtier de cassette (12), le dispositif de palier respectif (16) étant pourvu de moyens de blocage (18) pour coopérer avec un dispositif de blocage (19) pour l'arbre d'enroulement (11) présentant un dispositif de commutation (20) sollicité par ressort, provoquant l'état de libération desdits moyens de blocage, **caractérisé en ce que** les moyens de blocage (18) du dispositif de palier respectif (16) sont formés par au moins un disque abrasif respectif (21) situé sur l'arbre d'enroulement (11) et le dispositif de blocage (19) sollicité par ressort est formé par au moins un levier abrasif excentré (22) en liaison fonctionnelle avec ce disque abrasif (21).

2. Dispositif de rouleau selon la revendication 1, **caractérisé en ce que** le disque abrasif respectif (21) est réalisé de manière montée fixement sur l'arbre d'enroulement (11).

3. Dispositif de rouleau selon la revendication 2, **caractérisé en ce que** le disque abrasif respectif (21) est monté par collage fixement sur l'arbre d'enroulement (11).

4. Dispositif de rouleau selon la revendication 2, **caractérisé en ce que** le disque abrasif respectif (21) est monté par goujonnage fixement sur l'arbre d'enroulement (11).

5. Dispositif de rouleau selon la revendication 2, **caractérisé en ce que** le disque abrasif respectif (21) est monté par connexion par engagement positif avec l'arbre d'enroulement (11) fixement sur ce dernier.

6. Dispositif de rouleau selon l'une quelconque des revendications 1 à 5, **caractérisé en ce que** l'au moins un levier abrasif excentré (22) est monté sur un embout d'extrémité (17) du boîtier de cassette (12).

7. Dispositif de rouleau selon la revendication 6, **caractérisé en ce que** l'au moins un levier abrasif excentré (22) est monté sur un tourillon (23) au niveau d'un embout d'extrémité (17) du boîtier de cassette (12).

8. Dispositif de rouleau selon l'une quelconque des revendications 1 à 7, **caractérisé en ce que** l'au moins un levier abrasif excentré (22) présente au moins un disque de guidage (25) entourant au moins son alésage (24) prévu pour un élément de palier comme par exemple le tourillon (23), réalisé sous forme excentrique, et coopérant avec le disque abrasif (21) se trouvant sur l'arbre d'enroulement (11).

9. Dispositif de rouleau selon la revendication 8, **caractérisé en ce que** la surface de contact du disque de guidage excentrique (25) du levier abrasif excentré (22) et du disque abrasif (21) sur l'arbre d'enroulement (11) est réalisée sous forme essentiellement linéaire.

10. Dispositif de rouleau selon l'une quelconque des revendications 1 à 9, **caractérisé en ce que** le levier abrasif excentrique (22) est supporté de manière sollicitée par ressort par un ressort à branches pivotantes (26).

11. Dispositif de rouleau selon l'une quelconque des revendications 1 à 10, **caractérisé en ce que** le dispositif de commutation (20) provoquant l'état de libération du levier abrasif excentré (22) est réalisé sous forme de dispositif de commutation à touche (27) situé sur la barre de traction (14).

12. Dispositif de rouleau selon la revendication 11, **caractérisé en ce que** le dispositif de commutation à touche (27) situé sur la barre de traction (14) est réalisé sous forme de commande à relais.

13. Dispositif de rouleau selon l'une quelconque des revendications 1 à 10, **caractérisé en ce que** le dispositif de commutation (20) provoquant l'état de libération du levier abrasif excentré (22) est réalisé sous forme de commande à câble Bowden (29).

14. Dispositif de rouleau selon la revendication 13, **caractérisé en ce que** l'actionnement de la commande à câble Bowden (29) est réalisé sous forme mécanique.

15. Dispositif de rouleau selon la revendication 13, **caractérisé en ce que** l'actionnement de la commande à câble Bowden (29) est réalisé sous forme électromécanique.
